Europäisches Patentamt

European Patent Office

Office européen des brevets

(11) Veröffentlichungsnummer: **0 460 638 A1**

## EUROPÄISCHE PATENTANMELDUNG

(21) Anmeldenummer: 91109192.4

(51) Int. Cl.⁵: **D21C 9/06**

(22) Anmeldetag: **05.06.91**

(30) Priorität: **06.06.90 DE 4018120**
**30.07.90 DE 4024175**

(43) Veröffentlichungstag der Anmeldung:
**11.12.91 Patentblatt 91/50**

(84) Benannte Vertragsstaaten:
**AT BE ES FR GB NL SE**

(71) Anmelder: **Treu, Bernt U.**
**35, rue Frédéric Clément**
**F-92380 Garches(FR)**

(72) Erfinder: **Treu, Bernt U.**
**35, rue Frédéric Clément**
**F-92380 Garches(FR)**

(74) Vertreter: **Staeger, Sigurd, Dipl.-Ing. et al**
**Patentanwälte Dipl.-Ing. S. Staeger Dipl.-Ing.**
**Dipl.-Wirtsch.-Ing. R. Sperling Müllerstrasse**
**31**
**W-8000 München 5(DE)**

(54) **Verfahren und Vorrichtung zum Waschen von Zellstoff.**

(57) Bei einem Verfahren zum Waschen von Zellstoff nach einer Vorbehandlung mittels einer Waschflüssigkeit und mit Hilfe von Druckwirkung im Gegenstromverfahren in aufeinanderfolgenden Stufen, wobei der vorbehandelte Zellstoff zwischen zwei bandförmige Siebe eingebracht und zwischen diesen bis zur endgültigen Abscheid der Trockensubstanz transportiert wird, wird der Zellstoff einer mehrmaligen Druck- und Saugwirkung zwischen den gespannt gehaltenen Sieben unterworfen.

FIG. 1

Die Erfindung bezieht sich auf ein Verfahren zum Waschen von Zellstoff nach einer Vorbehandlung mittels einer Waschflüssigkeit und mit Hilfe von Druck- und/oder Saugwirkung im Gegenstromverfahren in aufeinanderfolgenden Stufen, wobei der vorbehandelte Zellstoff zwischen zwei bandförmige Siebe eingebracht und zwischen diesen bis zur endgültigen Abscheidung der Trockensubstanz geführt wird. Unter Vorbehandlung ist nicht nur ein Kochen, sondern auch z.B. eine mechanische Vorbehandlung zu verstehen. Unter Waschen ist die Trennung der Zellstoffasern von den anderen zum größten Teil gelösten Bestandteilen und abgebauten Holzbestandteilen, z.B. der verbrauchten Kochlauge zu verstehen, um aus letzterer die verwendeten Chemikalien soweit wie möglich wiederzugewinnen.

Aus der AT-PS 388 192 ist die Verwendung eines Siebbandpaares in einer Vorrichtung mit mehreren Waschstufen bekannt, wobei die einzelnen Behandlungsstufen untereinander bzw. übereinander angeordnet sind. Das Siebbandpaar wird in der Behandlungsstufe über relativ kleine Umlenkwalzen geführt und zwar jeweils an der Unterseite eines mit der Waschflüssigkeit unter Druck beaufschlagten Behälters. Diese Behälter weisen an der der Oberseite der Siebbänder bzw. des Materials zugewandten Unterseite Öffnungen für die Zuleitung der Behandlungsflüssigkeit auf.

Der Erfindung liegt die Aufgabe zugrunde, zu gewährleisten, daß bei energiesparender und umweltfreundlicher Behandlung die Bauhöhe der Vorrichtung verringert werden kann.

Die Aufgabe wird dadurch gelöst, daß erfindungsgemäß der Zellstoff einer mehrmaligen Druck- und Saugwirkung zwischen den gespannt gehaltenen Sieben unterworfen wird.

Durch dieses Verfahren wird es möglich, die Waschflüssigkeit auf ca. 3,5 m³ /Tonne Zellstoff zu senken und bei einer vergleichbaren oder gleichen Stufenzahl den Erfassungsgrad auf 99,5 % anzuheben. Der Berechnung der Waschflüssigkeit liegt folgende Formel zugrunde:

$$\underline{100 \times \% \ \mathbf{Waschdichte}} + \mathbf{Verdünnungsfaktor} = m^3/\mathbf{Tonne}$$
$$\% \ \mathbf{Waschdichte}$$

Der Verdünnungsfaktor bei einem Bandwäscher, welcher mit Sogwirkung arbeitet, liegt zwischen 0,5 - 1,0 .

Bei Anwendung des erfindungsgemäßen Verfahrens entfallen nicht nur die sonst üblichen Pumpen zur Umleitung der Waschflüssigkeit vollständig, sondern die geradlinige Zuführung der Siebbänder von Umlenkwalze zu Umlenkwalze verkürzt auch den Weg der Siebbänder.

Für die Behandlung des Zellstoffs werden zweckmäßigerweise die beiden Siebe horizontal oder annähernd horizontal geführt; der Zellstoff kann von beiden Sieben von einer die Druck- und/oder Saugbehandlung ausführenden Vorrichtung einer entsprechenden nächst höheren Vorrichtung jeweils wechselseitig zugeführt werden.

Nach einer abgewandelten Ausführungsform der Erfindung, werden die Saugbehandlungen mindestens teilweise in einer Schräglage der Siebe jeweils zwischen zwei Umlenkwalzen durchgeführt, deren Achsabstand in der Höhe größer ist als der Durchmesser einer Umlenkwalze. Die Schräglage der Siebe kann zwischen 40° und 60° betragen.

Der Erfindung liegt weiterhin die Aufgabe zugrunde, eine Vorrichtung für die Anwendung des oben beschriebenen Verfahrens zu schaffen.

Diese Vorrichtung ist dadurch gekennzeichnet, daß zwei synchron angetriebene Siebbänder von einer Druck- und/oder Saugvorrichtung zur nächsten Druck- und/oder Saugvorrichtung bewegbar sind und daß mindestens ein Siebband ein Endlossieb ist.

Bei einer Ausführungsform der erfindungsgemäßen Vorrichtung sind die Druck- und/oder Saugvorrichtungen im wesentlichen übereinander angeordnet; die beiden Siebbänder können über gegebenenfalls als Auspreßvorrichtung ausgebildeten Umlenkwalzen bewegbar sein; die Umlenkwalzen sind als Siebzylinder gegebenenfalls mit Saugwirkung ausgebildet. Die gesamte Vorrichtung kann mit einer Haube versehen turmartig ausgebildet sein.

Die als Saugkästen ausgebildeten Saugvorrichtungen sind zweckmäßigerweise in einem Höhenabstand von ca. 1,00 bis 2,00 m, vorzugsweise 1,50 m, angeordnet. Falls erforderlich, können der letzten Waschstufe Auspreßwalzen nachgeschaltet sein.

Nach einer abgewandelten Ausführungsform der erfindungsgemäßen Vorrichtung sind je Druck- und/oder Saugvorrichtung und ein Waschflüssigkeitsbehälter annähernd auf gleicher Höhe einander gegenüberliegend angeordnet. Gewöhnlich wird jedoch eine Versetzung der jeweils einander zugeordneten Vorrichtungsteile erfolgen, um den Transport der Waschflüssigkeit im Gegenstromverfahren zu gewährleisten. Es liegt auf der Hand, daß die beiden Siebe eine unterschiedliche Maschenweite aufweisen können. Wie bereits bemerkt, ist zweckmäßigerweise die Waschflüssigkeit ausschließlich durch Schwerkraft von Waschstufe zu Waschstufe bewegbar; auch können die Flüssigkeitsbehälter mit ihrer Oberfläche eine geringfügige Neigung zur Horizontalen aufweisen.

Nach einer abgewandelten Ausführungsform der erfindungsgemäßen Vorrichtung sind anstelle eines Siebbandes zwei oder mehrere nacheinander geschaltete endlose Siebbänder vorgesehen; hierdurch wird es möglich, unterschiedliche Zellstoffarten in einer Vorrichtung zu behandeln und/oder auch unterschiedliche Waschflüssigkeiten zu verwenden. Natürlich können auch die beiden Siebbänder so angeordnet sein, daß eine durchgehende Behandlung des Zellstoffes im Gegenstromverfahren möglich ist.

Nach einer abgewandelten Ausführungsform der erfindungsgemäßen Vorrichtung sind auf der dem Flüssigkeitsbehälter gegenüberliegenden Seite ein Gasmedium führende Düsen gleichmäßig verteilt angeordnet. Diese Düsen können mit einem Gasmedium, z.B. Luft, jedoch auch mit einem Chemikalien enthaltenden Gasmedium beaufschlagt werden, welches dem besonderen Zellstoff gerecht wird. Die Düsen können an parallel verlaufenden oder gitterförmig angeordneten Rohren angebracht sein.

Im Bereich der Siebeinlaufseite oberhalb der Flüssigkeitsbehälter sind vorzugsweise Überlaufrohre für die Waschflüssigkeit vorgesehen. Auf diese Weise wird ein Transport der Waschflüssigkeit von Behandlungsstufe zu Behandlungsstufe auf einfachste Weise gewährleistet.

Auf der Zeichnung sind mehrere Ausführungsbeispiele der für das erfindungsgemäße Verfahren zu verwendenden Vorrichtungen in stark schematisierter Weise dargestellt; sie werden nachfolgend näher beschrieben. Es zeigt:

Fig. 1      einen Längsschnitt durch eine Ausführungsform der Erfindung;
Fig. 2      einen Längsschnitt durch eine zweite Ausführungsform der Erfindung;
Fig. 3      einen Schnitt gemäß Linie 3-3 in Fig. 2;
Fig. 4      einen Schnitt gemäß Linie 4-4 in Fig. 2;
Fig. 5      einen Länggschnitt eines Details einer abgewandelten Ausführungsform;
Fig. 6      einen Längsschnitt durch ein Detail einer abgewandelten Ausführungsform;
Fig. 7      einen Fig. 1 ähnlichen Längsschnitt durch eine abgewandelte Ausführungsform;
Fig. 8      einen Längsschnitt durch eine weitere Ausführungsform der Erfindung;
Fig. 9      einen Längsschnitt durch eine weitere Ausführungsform der Erfindung;
Fig. 10     einen Längsschnitt durch eine Umlenkwalze und
Fig. 11     einen Querschnitt gemäß Linie 11-11 in Fig. 10.

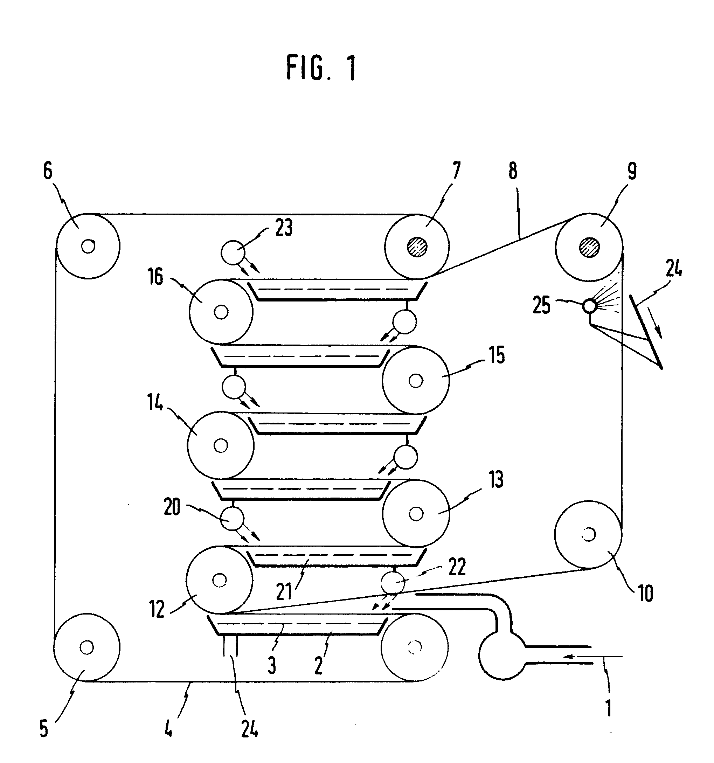

Bei der in Fig. 1 dargestellten Ausführungsform wird zwar das Auswaschen in jeweils horizontal oder annähernd horizontal verlaufenden Stufen vorgenommen, jedoch sind die einzelnen Stufen des Verfahrens übereinander angeordnet, so daß sich folgender Verfahrensablauf ergibt. Die bei 1 vorgesehene Aufgabe des Zellstoffes oder Zellstoffvlieses erfolgt durch Zuführung zu einem ersten Saugkasten 2, bei dem beispielsweise in der Höhe 3 der Waschflüssigkeitsspiegel verläuft. Der Spiegel muß natürlich einen gewissen Abstand vom Saugkastenboden haben, um einen sogenannten Siphoneffekt zu vermeiden.

Von der ersten Auswaschstufe erfolgt der Transport zu den anderen darüberliegenden Auswaschstufen, die jeweils auch einen Saugkasten aufweisen. Der Zellstoff wird von einem Band 4 aufgefangen, welches um Umlenkwalzen 5 und 6 geführt ist und von einer Antriebswalze 7 angetrieben wird. Ein weiteres Siebband 8 ist um eine Antriebswalze 9 und eine Umlenkwalze 10, geführt und läuft dann über Umlenkwalzen 12, 13, 14, 15 und 16 gemeinsam mit dem Band 4, wobei der Zellstoff oder das Zellstoffvlies zwischen den Bändern eingespannt gehalten wird. Der Zellstoff wird mit einer Stoffdichte von 1,2 bis 3,3 % bzw. 4,5% eingebracht und dann mittels Saugkästen 2 bzw. den darüberliegenden Saugkästen entwässert.

Das auf 10 - 13 % entwässerte Faservlies wird dann zwischen den beiden Sieben bzw. Siebbändern auf der ersten Umlenkwalze 12 auf ca. 25 % Stoffdichte weiter entwässert. Nach dieser Umlenkwalze 12 erfolgt die Befeuchtung mit der im Gegenstrom von oben durch Schwerkraft herangeführten Waschflüssigkeit, im vorliegenden Fall über ein Überlaufrohr 20. Die mit gelösten Substanzen angereicherte Waschflüssigkeit wird an der anderen Seite des Saugkasten 2 zugeführt. Auf dieselbe Weise erfolgt auf der einen Seite die Entwässerung durch Saugwirkung und gegebenenfalls bei den Umlenkwalzen durch Auspressung und die Bewässerung und Anfeuchtung jeweils über die Überlaufrohre. Demzufolge erfolgt die Zuführung der reinen Waschflüssigkeit über das Rohr 23 oberhalb des obersten Saugkastens, während die Ableitung der angereicherten Ablauge über den Ablauf 24 erfolgt. Andererseits wird der Zellstoff bzw. das Zellstoffvlies nach Durchlaufen der einzelnen Waschstufen, nach welchen jeweils eine Feststoffsubstanz von ca. 25 % erreicht wird, endgültig über das Sieb 8 und die Antriebswalze 9 ausgeleitet und dann über eine Rutsche 24 abgeschieden. Da die weitgehend getrocknete Substanz noch am Sieb haftet, sind Sprühdüsen 25 an der Rutsche 24 vorgesehen.

Die Waschflüssigkeit, die - wie bereits erwähnt - oben aufgegeben wird, verläßt die Maschine im

3

wesentlichen faserfrei, nachdem das Waschmedium bis auf 0,5 % alle organischen und anorganischen Trockensubstanzen aufgenommen hat, welche z.B. im Kocher erzeugt worden sind, in gelöstem Zustand.

Bei dieser Vorrichtung sind weder Zwischentanks noch Pumpen für den Transport des Zellstoffes von Verfahrensstufe zu Verfahrensstufe erforderlich. Die einzige Kraft, die den Waschvorgang in Bewegung hält, ist einerseits der synchrone Antrieb der beiden Siebe und die Druckwirkung im Bereich der Saugkästen o.dgl. .

Zu erwähnen ist noch, daß bei dieser Ausführungsform der Zellstoff jeweils abwechselnd von oben nach unten oder umgekehrt behandelt wird und daß somit beide Siebbänder ungefähr gleichmäßig stark belastet werden. Daher sollten auch für beide Siebbänder etwa gleich starke Antriebsvorrichtungen vorgesehen werden.

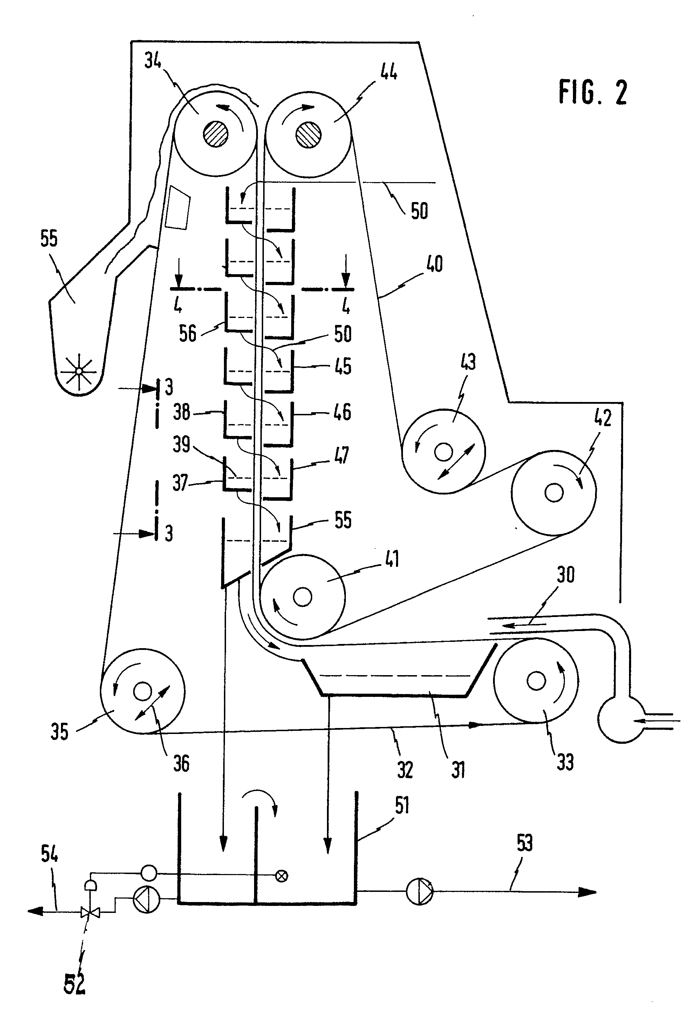

In Fig. 2 ist im Längsschnitt eine Vorrichtung vorgesehen, mit welcher gegebenenfalls bereits einen hohen Anteil, z.B. 25 % enthaltender Zellstoff oder Zellstoffvlies weiterbehandelt wird. So kann - dies muß jedoch nicht sein - ein etwa 25 % Trockensubstanz enthaltender Zellstoff über das Rohr in Pfeilrichtung 30 einem ersten Saugkasten 31 zugeführt werden, wobei die erste Absaugung gegebenenfalls noch ohne Zuhilfenahme des Doppelsiebes erfolgt. Das eine Sieb 32 - es kann z.B. wie bei bekannten Anlagen 9 m breit sein - läuft über die Umlenkwalze 33 und wird von der Antriebswalze 34 angetrieben. Die Umlenkwalze 35 ist als Spannwalze ausgebildet, wobei ein Spannen in Pfeilrichtung 36 erfolgen kann.

Das Siebband 32 läuft bei dieser vertikalen Anordnung jeweils an den übereinander angeordneten Sammelbehältern 37, 38 u.dgl. mehr vorbei, wobei in diesen Saugkästen ein Spiegel der Waschflüssigkeit in etwa in der Höhe 39 aufrechterhalten wird.

Das zweite Siebband 40 läuft über Umlenkwalzen 41 und 42 einer Spannwalze 43 und eine Antriebswalze 44. Es liegt auf der Hand, daß die beiden Antriebswalzen 34 und 44 synchron laufen.

Auf der in der Zeichnung rechts vom Band 40 dargestellten Seite sind untereinander Saugbehälter, z.B. 45, 46 und 47 vorgesehen, deren Böden in Bezug auf die Böden der Sammelbehälter 37 und 38 und dergleichen nach unten versetzt sind, so daß jeweils mit nicht gezeigten Rohren, jedoch in Pfeilrichtung 50 die Waschflüssigkeit von der nächst oberen zur nächst unteren Waschstufe bewegt wird. Diese Bewegung erfolgt wiederum ausschließlich durch Schwerkraft. Die beiden aus Kunststoff bestehenden Siebbänder 32 und 40 sind jedoch bei dieser Ausführungsform aufgrund der einseitigen Anordnung der Saugkästen unterschiedlich belastet, so daß es u. U. ausreicht, wenn das Siebband 40 mit einer Stecknaht versehen ist.

Die Waschflüssigkeit wird auch bei dieser Ausführungsform dem obersten Waschbehälter, wie mit dem Pfeil 50 angedeutet, zugeführt und verläßt die Vorrichtung auf zwei Wegen, wobei eine Sammlung in den beiden Behälterabschnitten des Behälters 51 erfolgt. Nach links wird über ein Ventil 52 die sogenannte faserfreie "saubere" Lauge in Pfeilrichtung 54 abgeleitet, sie wird zur Verdünnung der Stoffdichte benutzt.

Die faserhaltige, sogenannte schwarze Lauge, wird in Pfeilrichtung 53 der Rückgewinnung zugeführt. Die Rückgewinnung besteht in üblicher Weise aus einer Verdampfungsphase und der Wiedergewinnung der verwendeten Chemikalien.

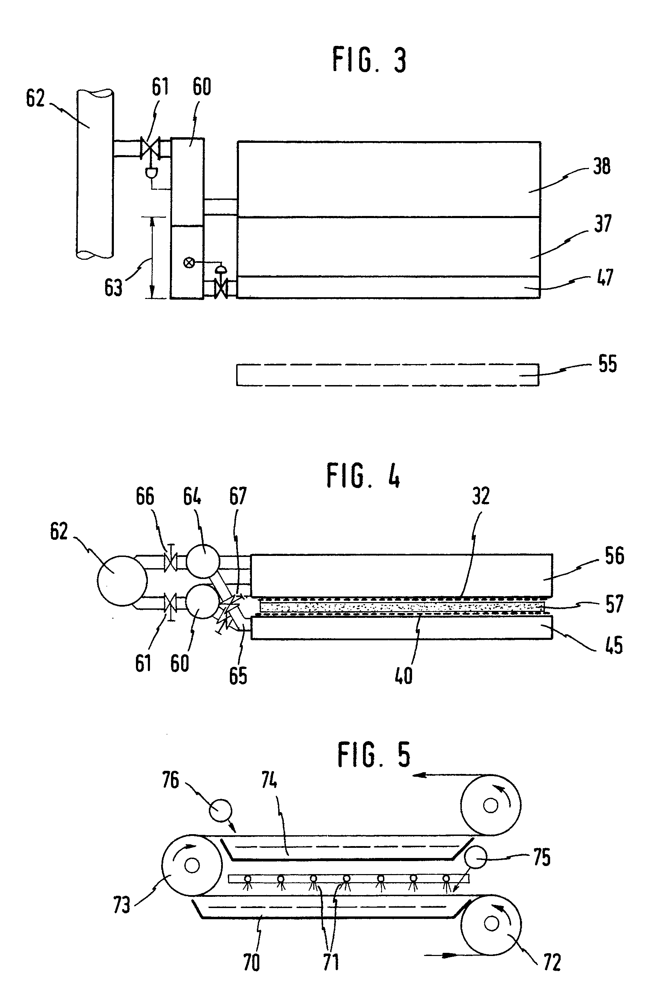

Das entwässerte Faservlies bzw. der "getrocknete" Zellstoff wird dann in einem Behälter 55 gesammelt und einer weiteren Behandlung zugeführt. Aus Fig. 3 und 4 ist ersichtlich, daß zwei übereinander angeordnete Sammelbehälter 37 und 38 in Bezug auf die zugeordneten Waschkästen 55 bzw. 47 versetzt angeordnet sind, so daß ein Gefälle - wie mit Pfeilen 50 angedeutet - erreicht wird. Der Sammelbehälter 38 ist über ein Standrohr 60 und ein Ventil 61 mit dem Saugsammelrohr 62 verbunden, wobei als Abstand von Unterkante des Sammelbehälters 38 und des zugeordneten Waschkastens 47 ein Abstand 63 von etwa 1,50 m vorgesehen ist. Im Standrohr wird jedem Saugkasten zugeordnet ein bestimmter Flüssigkeitsspiegel erreicht.

Aus Fig. 4 ist ersichtlich, daß dem Sammelkasten 56 der Saugkasten 45 zugeordnet ist und daß der Zellstoff 57 zwischen den Sieben 40 und 32 lotrecht nach oben geführt wird. Die Waschflüssigkeitsbehälter sind zum Sieb 40 hin offen, wie in Fig. 2 dargestellt; es können auch im Querschnitt halbrunde oder ein Drittel runde Behälter Verwendung finden; ihre offene Seite muß jedoch immer zum Sieb 40 weisen.

Aus Fig. 4 ist ferner ersichtlich, daß neben dem Vakuumsammelrohr 62 das Standrohr 60 und das Standrohr 64 vorgesehen sind, wobei die Umleitung der Waschflüssigkeit vom Saugkasten 56 zum Waschkasten 45 über ein Rohr 65 erfolgt. Selbstverständlich ist einerseits zwischen dem Saugsammelrohr 62 und dem Standrohr 60 das bereits erwähnte Ventil 61 vorgesehen. Weiterhin sind zwischen dem Rohr 62 und dem Rohr 64 ein Ventil 66 und im Rohr 65 ein Ventil 67 angeordnet.

Die in Fig. 5 nur teilweise dargestellte Vorrichtung weist zwar grundsätzlich den gleichen Aufbau wie die Vorrichtung nach Fig. 1 auf, jedoch erfolgt die Beaufschlagung des Doppelsiebes, mit welchem der Zellstoff transportiert wird, oberhalb des Flüssigkeitsbehälters 70 mit Druckluft oder einem gasförmigen Druckmedium, welches dem Zellstoff zugepaßt ist. Die einzelnen Düsen 71 sind an Rohren angeordnet, welche sich von Umlenkwalze 72 annähernd zur Umlenkwalze 73 erstrecken; der Waschflüssigkeitsbehälter 74 kann

EP 0 460 638 A1

wiederum als Saugkasten ausgebildet sein. Der Flüssigkeitstransport erfolgt im Gegenstrom über die Überlaufrohre 75 bzw. 76. Es liegt auf der Hand, daß sämtliche Arbeitsstufen oder auch nur ein Teil derselben mit einem gasförmigen Druckmedium beaufschlagt werden können; die Umlenkwalzen 72 und 73 können als Zylinder ausgebildet werden, welche dann z.B. durch den mechanischen Druck beim Umlenken der beiden Siebe Flüssigkeit aus dem Zellstoff bzw. dem Zellstoffvlies ausdrücken; sie können aber auch als Siebzylinder ausgebildet werden und durch Saugwirkung bei der Auspressung der Flüssigkeit mitwirken. Im Inneren der Siebzylinder können entsprechende Vorkehrungen, z.B. Schaufeln und ein mittiges Ableitungsrohr für die abgesaugte Flüssigkeit vorgesehen sein.

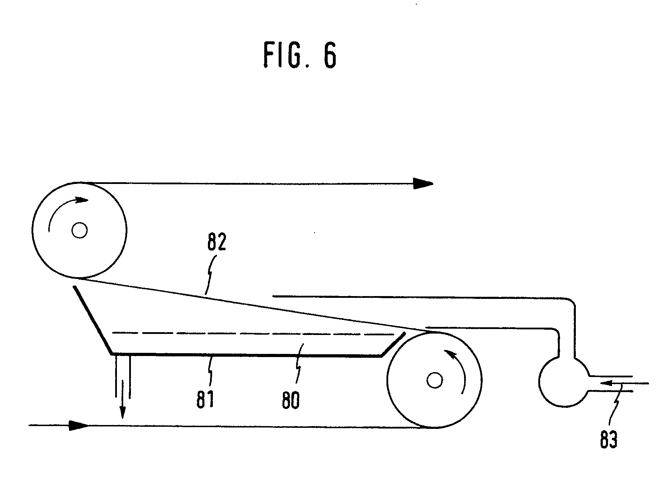

Bei der in Fig. 6 im Längsschnitt teilweise dargestellten abgewandelten Ausführungsform der Erfindung ist eine Schräganordnung der Saugkästen 80 vorgesehen, wobei zwar die Bodenfläche des jeweiligen Saugkastens annähernd horizontal verläuft, die Führung der beiden Siebbänder auf der Sieboberfläche 82 des Saugkastens jedoch mit einer kleinen Neigung nach oben in Drehungsrichtung der beiden Siebbänder vorgesehen ist. Dieser Saugkasten 80 ist zwar bei der dargestellten Ausführungsform nur als sogenannter erster Saugkasten nach der Zuführung des Zellstoffes in Pfeilrichtung 83 dargestellt, jedoch ist eine entsprechende Neigung der Siebkästen ohne weiteres auch bei den anderen Verfahrensstufen möglich. Es wäre dann die Zuleitung der Waschflüssigkeit von der nächst höheren Waschstufe in üblicher Weise, wie in Fig. 1 dargestellt, vorzusehen.

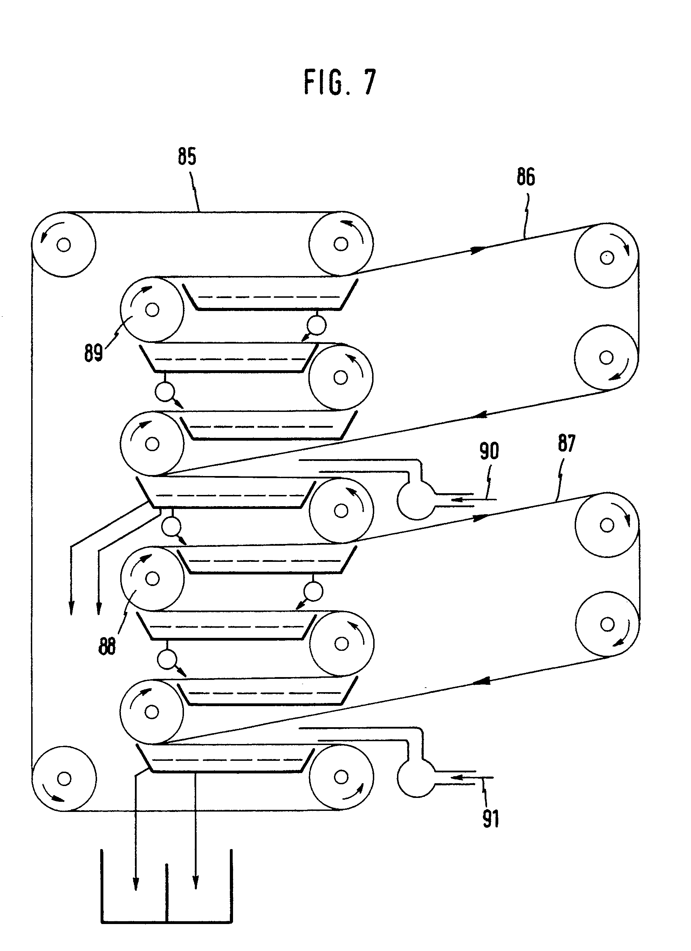

Bei der in Fig. 7 dargestellten Ausführungsform ist zwar von einem ähnlichen Aufbau der einzelnen Arbeitsstufen mit den Saugkästen übereinander und der Fließrichtung der Waschflüssigkeit im Gegenstrom ausgegangen worden, jedoch ist unter Beibehaltung des einen Siebbandes 85 das zweite Siebband in zwei getrennte Endlosbänder 86 und 87 aufgeteilt, wobei jedem Endlosband natürlich eine gesonderte Antriebswalze 88 bzw. 89 zugeordnet ist. Die Zuführung des Zellstoffes erfolgt an zwei übereinanderliegenden Stellen, nämlich an der Stelle 90 einerseits und an der Stelle 91 ande-rerseits. Die Waschflüssigkeit kann jedoch durchgehend von oben, d.h. vom obersten Saugkasten bis zum untersten Saugkasten fließen, so daß zwar unterschiedliche Zellstoffarten Verarbeitung finden können, jedoch dieselbe Waschflüssigkeit für beide Waschvorgänge. In Bezug auf die Anordnung der Umlenkwalzen und der Überlaufrohre wird auf die Ausführungsform nach Fig. 1 verwiesen.

Ergänzend ist noch darauf hinzuweisen, daß bei der Ausführungsform nach Fig. 2 zwischen den einzelnen Verfahrensabschnitten ein Trockensubstanzanteil von ca. 12 % erreicht wird, daß aber am Ende der Vorrichtung zwei Gautschwalzen angeordnet werden können, so daß der Trockensubstanzanteil nach Durchlaufen der Anlage 30 % betragen kann.

Alle Vorrichtungen oder Anlagen können mit einer Haube oder Umhüllung versehen sein, so daß sie umweltschonend sind.

Außer der beschriebenen Gegenstromanalage kann auch mit Pumpen und Zwischenbehältern gearbeitet werden, wobei der Zellstoff dann von oben nach unten transportiert wird und die Waschflüssigkeit jeweils von Arbeitsstufe zu Arbeitsstufe nach oben gepumpt werden muß.

Grundsätzlich wird bei allen beschriebenen Anlagen nur ein Waschflüssigkeitsanteil von ca. 4 - 4,5 m$^3$/Tonne Zellstoff benötigt.

Durch den hohen Wascherfassungsgrad jeder einzelnen Stufe nach der Erfindung wird die Anzahl der Stunden, die benötigt wird, um einen gewissen Wascherfassungsgrad zu erlangen, wesentlich verringert.

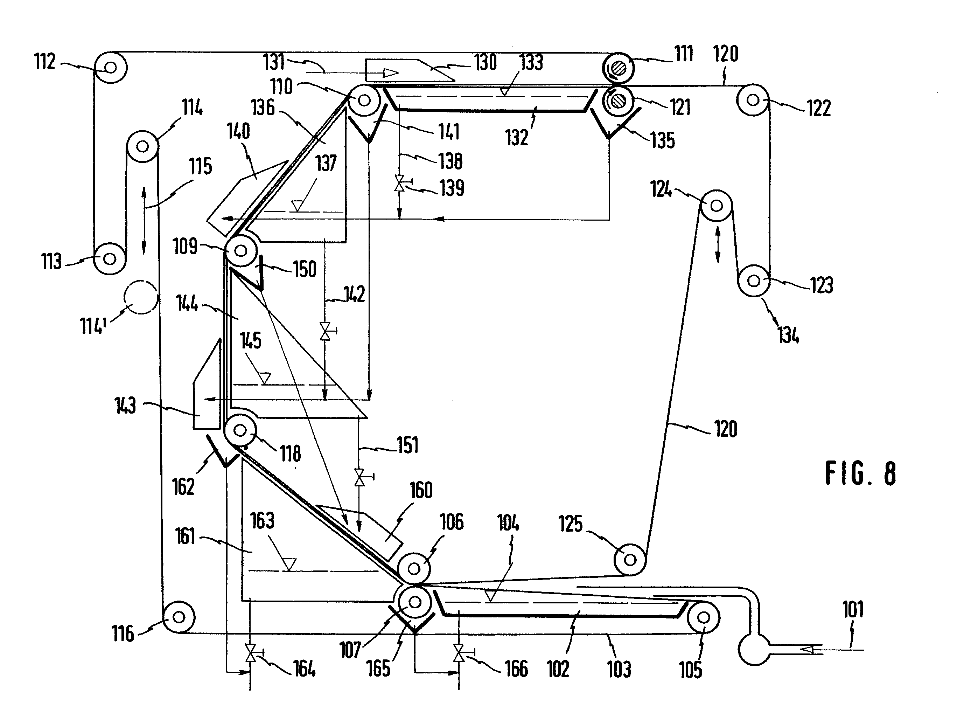

Die mit dem Pfeil 10 angedeutete Aufgabe des Zellstoffes oder Zellstoffvlieses bei der in Fig. 8 dargestellten Ausführungsform erfolgt durch Zuführung über einen Saugkasten 102 auf einem endlosen Siebband 103; im Saugkasten 102 ist mit der strichierten Linie 104 der Waschmediumspiegel angedeutet. Der Waschmediumspiegel muß natürlich einen gewissen Abstand vom Saugkastenboden haben, um einen sogenannten Siphoneffekt zu vermeiden.

Das Siebband 103 läuft über Umlenkwalzen 105 zwischen den Walzen 106 und 107 zur Umlenkwalze 108 und schließlich über die Umlenkwalze 109 und Umlenkwalze 110 zur Antriebswalze 111. Von der Antriebswalze 111 erfolgt der Vortrieb des Siebbandes 103, welches z.B. eine Breite bis zu 9 m haben kann, über die Umlenkwalze 105.

Das zweite Siebband 120 läuft von der Antriebswalze 121 über die Umlenkwalzen 122 und 123 zur Spannwalze 124 und zur Umlenkwalze 125; zwischen den beiden Antriebswalzen 111 und 121 erfolgt eine Auspressung auf z.B. 25 % Stoffdichte.

Das Siebband 120 wird dann gemeinsam mit dem Siebband 103 von den beiden Walzen 106 und 107 erfaßt; das Faservlies wird hierbei ausgepresst; das Siebband 120 läuft dann mit dem Siebband 103 gemeinsam über die Umlenkwalzen 108, 109 und 110.

Die gesamte Vorrichtung erstreckt sich in der Vertikalen und ist mit einer Haube abgedeckt und bildet sozusagen einen Waschturm.

Das Waschmedium wird im Gegenstromverfahren, d.h. also von oben nach unten der Anlage zugeführt,

5

wobei die "saubere" bzw. wiedergewonnene Waschflüssigkeit oder das entsprechende Waschmedium über ein Gehäuse 130, z.B. in Pfeilrichtung 131, zugeführt wird. Dieses Gehäuse ist gegenüber den beiden Siebbändern 103 und 120 abgedichtet, so daß die Waschflüssigkeit unter Druck auf das Siebbandpaar aufgegeben werden kann. Hierfür können z.B. an parallelen Rohren angebrachte Düsen vorgesehen sein.

Im Saugkasten 132 mit einem Flüssigkeitsspiegel 133 erfolgt dann bekannterweise die Saugbehandlung, so daß das z.B. 25 % Trockensubstanz enthaltende Vlies über das Siebband 120 zur Abnahmestelle 134 transportiert wird. Das Vlies hängt an der Siebfläche bzw. dem Siebband 120 und löst sich nur schwer von letzterer bzw. letzterem, so daß gegebenenfalls in üblicher Weise Sprühvorrichtungen o.dgl. im Bereich der Umlenkwalze 123 vorgesehen sein müssen.

Die Waschflüssigkeit bzw. das Waschmedium strömt vom Saugkasten 132 und einem Sammelbehälter 135 zum nächsttieferen Gehäuse 140. Auch eine nicht näher dargestellte Ableitung 138 ist über ein Ventil 139 mit der Zuleitung von Sammelbehälter 135 verbunden. Die Siebfläche des Saugkastens schließt mit der Horizontalen einen Winkel von annähernd 45° ein, so daß die Absaugung in den Saugkasten 136 an dieser Schräge erfolgt. Die Flüssigkeit vom Sammelbehälter 136 wird zu einem Gehäuse 143 geleitet, in welchem die Waschflüssigkeit, nunmehr bereits verunreinigt, unter Druck auf die Siebbänder aufgegeben wird. Dies kann mit Düsen o.dgl. erfolgen.

Der Druckkasten 140 erstreckt sich in etwa auf die Hälfte des Siebbereichs zwischen den beiden Umlenkwalzen 109 und 110, so daß in diesem Bereich gleichzeitig auch abgesaugt wird. Im restlichen Bereich ist allein das Evakuieren vorgesehen.

Die im Sammelbehälter 141 bzw. durch die Ableitung 142 transportierte Waschflüssigkeit bzw. das Waschmedium wird einem Druckbehälter 143 zugeleitet, welcher ähnlich wie der Druckbehälter 140 wirkt. Der Saugkasten 144 enthält bis zum Mediumspiegel 145 eine weiter "verunreinigte" Waschflüssigkeit. Im Bereich zwischen den Umlenkwalzen 108 und 109 erfolgt die Druck- und/oder Saugbehandlung in einem vertikalen Bereich der Siebbänder.

Von einem Sammelbehälter 150 und der angedeuteten Ableitung 151 wird die entsprechend weiter "verunreinigte" Waschflüssigkeit einem Druckbehälter 160 zugeführt, welcher die gleiche Funktion hat wie die Druckbehälter 140 und 143. Der Saugkasten 161 weist wiederum eine schräge Siebfläche von ca. 45° auf.

Die im Sammelbehälter 162 unterhalb der Umlenkwalze 108 und vom Saugkasten 161 mit einem Flüssigkeitsspiegel 163 abgeleitete "verunreinigte" Waschflüssigkeit oder das entsprechende Waschmedium wird über ein Ventil 164 geleitet. Das gleiche gilt für die vom Saugkasten 102 abgeleitete Waschflüssigkeit, die zusätzlich von einem Sammelbehälter 165 stammt und über ein Ventil 166 einem weiter unten näher bezeichneten Zweck zugeführt wird.

Das bei dieser Ausführungsform vorgesehene 4-stufige Behandlungsverfahren mit einem Waschmedium weist somit einen Saugkasten 161 mit schräger Siebfläche auf der Seite des Siebbandes 103, einen Saugkasten 144 mit lotrechter Siebfläche auf der Seite des Siebbandes 120, einen Saugkasten 136 mit schräger Siebfläche auf der Seite des Siebbandes 120 und schließlich einen Saugkasten 132 mit waagrechter Siebfläche auf der Seite des Siebbandes 120 auf.

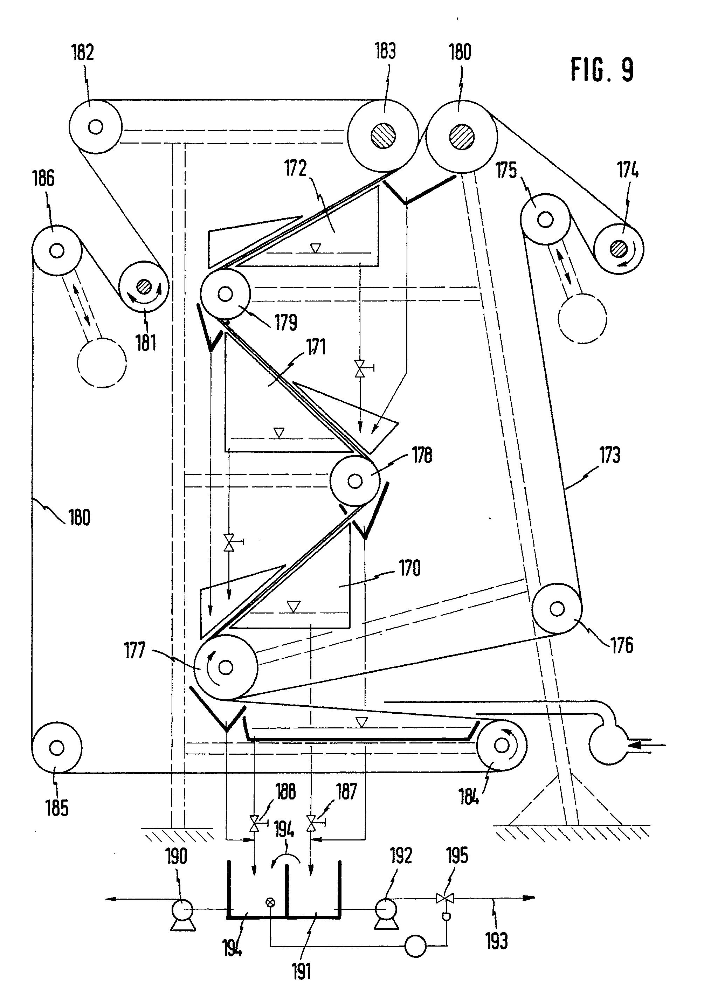

Bei der in Fig. 9 dargestellten Ausführungsform der Erfindung wird dreistufig vorgegangen, wobei die Behandlung mit dem Waschmedium über Saugkästen 170, 171 und 172 erfolgt. Das eine Siebband 173 wird von einer Antriebswalze 174 bewegt und läuft über die Spannwalze 175 und die Umlenkwalzen 176, 177, 178, 179 und 180, welche jeweils ebenfalls als zusätzliche Antriebswalze ausgebildet sein kann. Die Ableitung des "angereicherten" Waschmediums zur lotrecht nächstunteren Waschstufe erfolgt auf die gleiche Weise wie im Zusammenhang mit Fig. 1 beschrieben. Das Siebband 180 wird von der Antriebswalze 181 angetrieben und läuft über die Umlenkwalze 186, welche als Streckwalze ausgebildet sein kann über die Umlenkwalzen 185, 184 und die gemeinsamen Umlenkwalzen 177, 178, 179 und 183, welche letztere auch als Antriebswalze ausgebildet sein kann.

Entsprechend den Ventilen 166 und 164 sind bei dieser Ausführungsform Ventile 187 und 188 vorgesehen, wobei die über das Ventil 188 abgeleitete Waschflüssigkeit über eine Pumpe 190 zur Verdünnung transportiert wird. Hierbei handelt es sich um faserhaltiges Material. Das im Behälter 191 unterhalb des Ventils 187 gesammelte Medium wird über eine Pumpe 192 als faserfreies Material im Pfeilrichtung 193 der Rückgewinnung zugeleitet. Mit dem Pfeil 194 ist ein Überlauf angedeutet, und zwar vom Behälter 191 zum Behälter 194, welcher das faserfreie Material aufnimmt. Dabei steuert das Ventil 195 das Niveau am Behälter 194 derart, daß jeweils ausreichend Flüssigkeit für die Verdünnung verfügbar ist.

Die jeweiligen Umlenkwalzen im Bereich der einzelnen Behandlungsstufen können zu Entwässerungszwecken herangezogen werden. Diese Walzen können entsprechend den heutigen maximal benötigten Siebbreiten von 9 m entsprechend lang ausgebildet sein und als Siebzylinder Verwendung finden; dann kann die Evakuierung des Zellstoffvlieses über die Siebbänder auch im Umlenkwalzenbereich erfolgen.

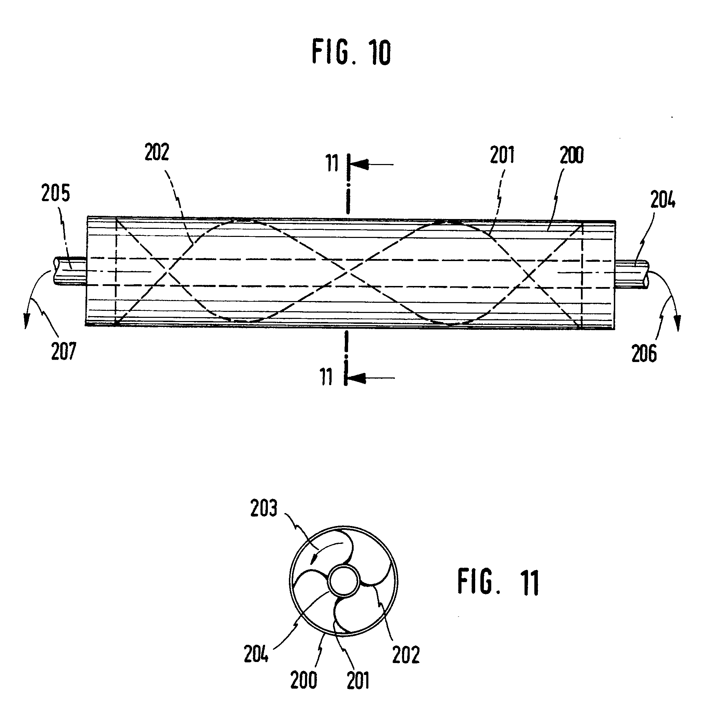

Eine entsprechend als Siebzylinder ausgebildete Umlenkwalze 200, z.B. mit einem Durchmesser von 50 cm bis 2 m, weist im Inneren spiralförmig an der Innenseite des Siebzylinders angebrachte Schaufeln 201 und 202 auf, die - wie aus Fig. 10 ersichtlich - einen schöpfkellenartigen Querschnitt aufweisen und das durch Saugwirkung im Siebzylinder 210 gesammelte Waschmedium in Achsrichtung abgeleitet wird.

Die als Hohlzylinder 204 ausgebildete Welle des Siebzylinders weist in Achsrichtung verlaufende schlitzartige Öffnungen auf, über welche das von den Schaufeln aufgefangene Waschmedium in Achsrichtung abgeleitet wird.

Bei der dargestellten Ausführungsform ist die mit der Siebinnenseite fest verbundene Welle 204 eine Hohlwelle mit einer Drehachse 205. Die Ableitung erfolgt in Pfeilrichtung 206 oder Pfeilrichtung 207.

Die Druckbeaufschlagung in den Kästen 130 (Fig. 8) kann auch nur durch Druckluft erfolgen.

**Patentansprüche**

1. Verfahren zum Waschen von Zellstoff nach einer Vorbehandlung mittels einer Waschflüssigkeit und mit Hilfe von Druck- und/oder Saugwirkung im Gegenstromverfahren in aufeinanderfolgenden Stufen, wobei der vorbehandelte Zellstoff zwischen zwei bandförmige Siebe eingebracht und zwischen diesen bis zur endgültigen Abscheidung der Trockensubstanz transportiert wird, **dadurch gekennzeichnet**, daß der Zellstoff einer mehrmaligen Druck- und Saugwirkung zwischen den gespannt gehaltenen Sieben unterworfen wird.

2. Verfahren nach Anspruch 1, **dadurch gekennzeichnet**, daß für die Behandlung des Zellstoffs die beiden Siebe horizontal oder annähernd horizontal geführt werden.

3. Verfahren nach Anspruch 1, **dadurch gekennzeichnet**, daß die Saugbehandlungen mindestens teilweise in einer Schräglage der Siebe jeweils zwischen zwei Umlenkwalzen durchgeführt werden, deren Achsabstand in der Höhe größer ist als der Durchmesser einer Umlenkwalze.

4. Verfahren nach Anspruch 3, **dadurch gekennzeichnet**, daß die Schräglage der Siebe zwischen 40° und 60° beträgt.

5. Verfahren nach Anspruch 3 oder 4, **dadurch gekennzeichnet**, daß die Druckbehandlung mit dem Waschmedium und die Saugbehandlung mindestens teilweise gleichzeitig und/oder getrennt vorgenommen werden.

6. Verfahren nach Anspruch 3, **dadurch gekennzeichnet**, daß während einer Behandlungsstufe zunächst gleichzeitig mit Druck- und Saugwirkung und danach allein mit Saugwirkung gearbeitet wird.

7. Verfahren nach einem oder mehreren der Ansprüche 1 bis 6, **dadurch gekennzeichnet**, daß der Zellstoff von beiden Sieben von einer die Druck- und/oder Saugbehandlung ausführenden Vorrichtung einer entsprechenden nächst höheren Vorrichtung jeweils wechselseitig zugeführt wird.

8. Vorrichtung zur Durchführung des Verfahrens nach einem oder mehreren der Ansprüche 1 bis 7, **dadurch gekennzeichnet**, daß zwei synchron angetriebene Siebbänder von einer Druck- und/oder Saugvorrichtung zur nächsten Druck- und/oder Saugvorrichtung bewegbar sind und daß mindestens ein Siebband ein Endlossieb ist.

9. Vorrichtung nach Anspruch 8, **dadurch gekennzeichnet**, daß die Druck- und/oder Saugvorrichtungen im wesentlichen übereinander angeordnet sind.

10. Vorrichtung nach Anspruch 8 oder 9, **dadurch gekennzeichnet**, daß die beiden Siebbänder über gegebenenfalls als Auspreßvorrichtung ausgebildeten Umlenkwalzen bewegbar sind.

11. Vorrichtung nach Anspruch 10, **dadurch gekennzeichnet**, daß die Umlenkwalzen als Siebzylinder gegebenenfalls mit Saugwirkung ausgebildet sind.

12. Vorrichtung nach einem oder mehreren der Ansprüche 7 bis 11, **dadurch gekennzeichnet**, daß die als Saugkästen ausgebildeten Saugvorrichtungen mit einem Höhenabstand von ca. 1,00 bis 2,00 m, vorzugsweise 1,50 m, angeordnet sind.

**13.** Vorrichtung nach einem der Ansprüche 7 bis 12, **dadurch gekennzeichnet**, daß innerhalb einer Umhüllung die jeweiligen Umlenkwalzen in unterschiedlichen Höhenlagen angeordnet sind und daß die Siebe mindestens in einem Winkel von 15° zur nächsthöheren Umlenkwalze angeordnet sind.

**14.** Vorrichtung nach Anspruch 13, **dadurch gekennzeichnet**, daß der Winkel 30° bis 60°, vorzugsweise annähernd 45° beträgt.

**15.** Vorrichtung nach Anspruch 5 oder 6, **dadurch gekennzeichnet**, daß jeder Umlenkwalze ein Flüssigkeitsauffangbehälter zugeordnet ist.

**16.** Vorrichtung nach einem oder mehreren der Ansprüche 7 bis 15, **dadurch gekennzeichnet**, daß für die Druckbeaufschlagung mit dem Waschmedium abgedichtete Gehäuse vorgesehen sind.

**17.** Vorrichtung nach Anspruch 16, **dadurch gekennzeichnet**, daß die Gehäuse auf der saugkastenabgekehrten Seite der Siebe vorgesehen sind.

**18.** Vorrichtung nach einem oder mehreren der Ansprüche 7 bis 17, **dadurch gekennzeichnet**, daß anstelle von einem Siebband zwei oder mehrere nacheinander geschaltete endlose Siebbänder vorgesehen sind.

**19.** Vorrichtung nach einem oder mehreren der Ansprüche 7 bis 18, **dadurch gekennzeichnet**, daß auf der dem Flüssigkeitsbehälter gegenüberliegenden Seite ein Gasmedium führende Düsen gleichmäßig verteilt angeordnet sind.

**20.** Vorrichtung nach Anspruch 19, **dadurch gekennzeichnet**, daß die Düsen an parallel verlaufenden oder gitterförmig angeordneten Rohren angebracht sind.

**21.** Vorrichtung nach einem oder mehreren der Ansprüche 7 bis 20, **dadurch gekennzeichnet**, daß im Bereich der Siebeinlaufseite oberhalb des Flüssigkeitsbehälters Überlaufrohre für die Waschflüssigkeit vorgesehen sind.

**22.** Vorrichtung nach einem oder mehreren der Ansprüche 7 bis 21, **dadurch gekennzeichnet**, daß die Umlenkwalzen als Siebwalzen mit einer negativen Druckbeaufschlagung, die Wellen als Hohlwellen ausgebildet und mit mindestens einer spiralförmigen Schaufel versehen sind.

**23.** Vorrichtung nach Anspruch 22, **dadurch gekennzeichnet**, daß in einer Umlenkwalze mindestens zwei spiralförmige Schaufeln vorgesehen sind und daß die Hohlwelle zwei sich in deren Längsrichtung erstreckende Kammern aufweist.

# FIG. 1

FIG. 2

# FIG. 3

# FIG. 4

# FIG. 5

# FIG. 6

# FIG. 7

FIG. 8

EP 0 460 638 A1

FIG. 9

# FIG. 10

# FIG. 11

# EUROPÄISCHER RECHERCHENBERICHT

Nummer der Anmeldung

**EP 91 10 9192**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | WO-A-8 603 795 (KMW AKTIEBOLAG) <br> * das ganze Dokument * <br> — — — | 1,2,7-11, 15-23 | D 21 C 9/06 |
| X,D | WO-A-8 802 046 (MASCHINENFABRIK ANDRITZ AKTIEN-GESELLSCHAFT) <br> * das ganze Dokument & AT-A-388192 * <br> — — — | 3-6,12-14 | |
| A | US-A-4 151 093 (M.KROFTA) <br> * das ganze Dokument * <br> — — — | | |
| A | GB-A-2 166 660 (GREEN BAY PACKAGING INC.) <br> * das ganze Dokument * <br> — — — — — | | |

| | RECHERCHIERTE SACHGEBIETE (Int. Cl.5) |
|---|---|
| | D 21 C |

Der vorliegende Recherchenbericht wurde für alle Patentansprüche erstellt

| Recherchenort | Abschlußdatum der Recherche | Prüfer |
|---|---|---|
| Den Haag | 03 September 91 | SONGY O.M-L.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument